# EUROPÄISCHE PATENTSCHRIFT

(11) **EP 2 079 816 B1**
(45) Veröffentlichungstag und Bekanntmachung des Hinweises auf die Patenterteilung: **14.11.2012**
(21) Anmeldenummer: 07820496.3
(22) Anmeldetag: 24.09.2007
(51) Int. Cl.: C09J 7/02, B32B 27/18, B32B 27/32, B82Y 30/00

(54) **VERWENDUNG EINES KLEBEBANDS MIT EINEM TRÄGER, DER CARBON NANOTUBES ( CNT) ENTHÄLT ALS VERPACKUNGSKLEBEBAND**
USE OF AN ADHESIVE TAPE COMPRISING A BACKING THAT CONTAINS CARBON NANOTUBES (CNT) AS PACKAGING TAPE
UTILISATION D'UN RUBAN ADHÉSIF COMPRENANT UN SUPPORT QUI CONTIENT DES NANOTUBES DE CARBONE COMME BANDE D'EMBALLAGE

(30) Priorität: 06.10.2006 DE 102006047734
(43) Veröffentlichungstag der Anmeldung: 22.07.2009
(73) Patentinhaber: TESA SE, 20253 Hamburg (DE)
(72) Erfinder: MÜSSIG, Bernhard, 21218 Seevetal (DE); PRENZEL, Alexander, 20259 Hamburg (DE); LÜHMANN, Bernd, 22844 Norderstedt (DE)
(86) Internationale Anmeldenummer: PCT/EP2007/060089
(87) Internationale Veröffentlichungsnummer: WO 2008/043659

(56) Entgegenhaltungen:
- DE-U1-202006 002 019
- COLEMAN ET AL: "Small but strong: A review of the mechanical properties of carbon nanotube-polymer composites" August 2006 (2006-08), CARBON, ELSEVIER, OXFORD, GB, PAGE(S) 1624-1652 , XP005433093 ISSN: 0008-6223 Zusammenfassung Absatz [06.3]
- BAUGHMANN R H ET AL: "Carbon Nanotubes - the Route Toward Appplications" 2. August 2002 (2002-08-02), SCIENCE, AMERICAN ASSOCIATION FOR THE ADVANCEMENT OF SCIENCE,, US, PAGE(S) 787-792 , XP002244531 ISSN: 0036-8075 in der Anmeldung erwähnt Zusammenfassung Seite 789, linke Spalte
- E. M. Mount: "Films, Manufacture", Encyclopedia of Poymer Science and Technology, 15 July 2002 (2002-07-15), pages 283-305, DOI: 10.1002/0471440264.pst132 Retrieved from the Internet: URL:http://onlinelibrary.wiley.com/doi/10. 1002/0471440264.pst132/pdf [retrieved on 2010-09-14]

## Beschreibung

Gegenstand der Erfindung ist die Verwendung eines Klebebands mit einem Träger, der sich aus einer oder aus mehreren Trägerfolien zusammensetzt, wobei auf den Träger zumindest einseitig eine Klebemasse zumindest partiell aufgebracht.

Folien mit hoher Längsfestigkeit erreicht man üblicherweise durch Verstrecken von schmelzextrudierten teilkristallinen Thermoplasten wie Polypropylen oder Polyester. Dabei handelt es sich überwiegend um eine biaxiale Verstreckung. Es gibt Folien, welche zur weiteren Erhöhung der Längsfestigkeit nur in Längsrichtung orientiert sind und dadurch besonders hohe Zugfestigkeiten und E-Moduli aufweisen. Diese werden zur Herstellung von so genannten Strapping Tapes, die in Bündelungs- und Verschlusssicherungsanwendungen dienen, und Aufreißstreifen eingesetzt.

Die EP 0 255 866 A1 beschreibt ein Klebeband aus einem Polypropylenträger, welcher LLDPE als Weichmacher enthält. LLDPE verbessert die Zähigkeit der Folie, setzt aber die Zugfestigkeit und das E-Modul herab.

Die DE 36 40 861 A1 beschreibt einen Aufreißstreifen mit verringerter Abreißneigung durch Verwendung einer in Längsrichtung verstreckten Folie, welche durch Coextrusion von Rohstoffen unterschiedlicher Zähigkeit hergestellt ist. Die zähe und weiche Coextrusionsschicht verringert die Bildung von Mikrorissen beim Schneiden des Produktes und verbessert dadurch die Seiteneinreißfestigkeit. Sie trägt jedoch nicht zur

Die DE 20 2006 002 019 U beschreibt ein Klebeband mit einem Trägermaterial auf das zumindest einseitig eine Klebemasse aufgetragen ist und dessen Festigkeit in Längsrichtung durch integrierte Fasern oder Filamente verstärkt ist.

Bei hoher Belastung müssen Folien beziehungsweise damit hergestellte Klebebänder mit Filamenten oder Netzen aus Glas oder Kunststoff verstärkt werden. Die Herstellung solcher Filamentklebebänder ist anlagenseitig sehr aufwändig und damit teuer sowie störanfällig.
Neben der Basisfolie werden zusätzlich noch die Filamente und Laminierkleber (beziehungsweise zusätzliche Haftkleberbeschichtungen) benötigt, was die Produkte weiter verteuert und mehr Rohstoffi-essourcen bindet. Weitere Nachteile solcher Filamentklebebänder sind die geringe Knickbruchbeständigkeit, die unsauberen Schneidkanten und die fehlende Durchschweißbarkeit und Recyclingfähigkeit.
Die Herstellung solcher wird zum Beispiel in der US 4,454,192 A beschrieben.

Die US 4,592,938 A offenbart ein Verfahren zur Herstellung von Folien für Kunststoffsäcke, Griffe und Stretchverpackungen. Ein Verstärkungseffekt wird durch in Längsrichtung verlaufende coextrudierte fadenartige Streifen im Inneren der Folie erzielt. Das Verfahren ist auf Polypropylen nicht anwendbar, da der übliche Gelanteil zwangsläufig die Fadenkanäle der Düse verstopft. Die Folien sind unverstreckt und weisen daher nur geringe Längsfestigkeit auf.

Die US 5,145,544 A und US 5,173,141 A beschreiben ein Klebeband aus monoaxial verstreckter Folie, welche eine Rippenstruktur zur Verstärkung aufweist, wobei die Rippen zum Teil aus der Oberfläche herausragen und zum Teil in die Folienoberfläche eingebettet und zwischen Folie und Rippen Kerbfugen ausgebildet sind. Die Folie erreicht hohe Seiteneinreißfestigkeit, die Zugfestigkeit und Dehnbarkeit hingegen sind noch verbesserungswürdig. Der wesentliche Mangel besteht darin, dass die Folie nicht im Produktionsmaßstab herstellbar ist. Die Rippenstruktur an der Oberfläche führt auch leicht zu Beschichtungsfehlem beim Auftragen von Releasemitteln oder Primern bei der Weiterverarbeitung zu Klebebändern, da die Auftragsverfahren für Folien eine glatte Oberfläche erfordern. Weiterhin sind Folien mit Verstärkungsstreifen oder Rippenstrukturen in oder auf der Oberfläche nachteilig für eine Bedruckung, die ebene Oberflächen voraussetzt. Insbesondere bei einer Nutzung der offenbarten Folie für ein Verpackungsklebeband ist die Bedruckbarkeit für den Kunden ein wichtiges Kriterium. Die EP 1 101 808 A1 versucht, die genannten Nachteile zu beseitigen, indem die Rippenstrukturen in das Innere der Folie verlegt wurden. Die Erfindung wird jedoch nicht großtechnisch umgesetzt, da das Herstellverfahren sehr aufwändig ist. Alle genannten Folien weisen gegenüber einer normalen Klebebandfolie eine verbesserte Zugfestigkeit und ein besseres E-Modul in Längsrichtung auf, sind jedoch nur verhältnismäßig aufwändig herstellbar. Auf der anderen Seite können sie die Eigenschaften von Produkten mit Glas- oder Polyesterfilamenten bei Weitem nicht erreichen.

Compounds aus Polypropylen und Glasfasern sind für Spritzgussanwendungen bekannt, diese sind wegen der Größe der Fasern jedoch nicht zu Folien verarbeitbar und somit als glasfaserverstärkte Folien als Klebebandträger nicht anwendbar.

Nanoröhren (auch Nanotubes) sind Röhren, deren Durchmesser kleiner ist als 100 Nanometer; typischerweise beträgt er nur wenige Nanometer (die inneren Röhren in mehrwandigen Nanotubes können bis zu 0,3 Nanometer dünn werden). Um von einer Röhre sprechen zu können, sollte die Länge den Durchmesser übersteigen; bei Kohlenstoffnanoröhren werden Längen von 20 Zentimetern erreicht. Typisch sind Längen von einigen Mikrometern.
Nanoröhren können ein- oder mehrwandig sein (single wall nanotube SWNT beziehungsweise multiple wall nanotube MWNT), und die Wand kann einen geschlossenen Ring oder eine spiralige Struktur ausbilden. Je nach Produktionsbedingungen entstehen auch ganze Bündel oder Fäden von Nanoröhren.
Kohlenstoffnanoröhren, auch CNT (carbon nanotubes) genannt , sind mikroskopisch kleine röhrenförmige Gebilde (molekulare Nanoröhren) aus Kohlenstoff.
Ihre Wände bestehen wie die der Fullerene oder wie die Ebenen des Graphits nur aus Kohlenstoff, wobei die Kohlenstoffatome eine wabenartige Struktur mit Sechsecken und jeweils drei Bindungspartnern einnehmen (vorgegeben durch die sp²-Hybridisierung). Der Durchmesser der Röhren liegt im Bereich von 1 bis 50 nm. Längen von mehreren Millimetern für einzelne Röhren und bis zu 20 Zentimetern für Röhrenbündel werden erreicht.
Man unterscheidet zwischen ein- und mehrwandigen, zwischen offenen oder geschlossenen Röhren (mit einem Deckel, der einen Ausschnitt aus einer Fullerenstruktur hat) und zwischen leeren und gefüllten Röhren.
Je nach Detail der Struktur ist die elektrische Leitfähigkeit innerhalb der Röhre metallisch oder halbleitend. Es sind auch Kohlenstoffröhren bekannt, die bei tiefen Temperaturen supraleitend sind.

Die mechanischen Eigenschaften von Kohlenstoff-Nanoröhrchen sind überragend. CNTs haben eine Dichte von 1,3 bis 1,4 g/cm³ und eine Zugfestigkeit von 45 Milliarden Pascal.
Eine besondere Form von Kohlenstoffnanoröhren sind aggregierte Diamant-Nanoröhren (ADNRs, Aggregated Diamond NanoRods). ADNRs sind die dichteste bekannte Form von Kohlenstoff. ADNRs werden aus Fulleren bei hoher Temperatur (2500 Kelvin) und hohem Druck (20 GPa) hergestellt. Sie besitzen einen Kompressionsmodul von 491 GPa, Diamant erreicht hingegen nur 442 GPa.

Das Interesse an Carbon Nanotubes als Füllstoffe und vor allen Dingen Single-walled Carbon Nanotubes (SWNTs) wächst stetig aufgrund ihrer einzigartigen chemischen und physikalischen Eigenschaften sowie der Einsatzmöglichkeiten in den Materialwissenschaften [Baughman RH, Zakhidov AA, de Heer WA: "Carbon nanotubes-a route toward applications," Science 2002, 297, 787 bis 792]. Jedoch konnten trotz der zahlreichen Aktivitäten auf diesem Gebiet viele Fragen bezüglich einer effektiven Dispergierung der Nanotubes in einer Polymermatrix nicht vollständig geklärt werden. SWNTs besitzen eine außergewöhnliche Kombination von mechanischen, elektrischen und thermischen Eigenschaften. Sie weisen Zugspannungen von 50 bis 200 GPa und berechnete Young's-Moduli von 1 bis 5 TPa auf [Yu M-F, Lourie O, Dyer MJ, Moloni K, Kelly TF, Ruoff RS: "Strength and Breaking Mechanism of Multiwalled Carbon Nanotubes Under Tensile Load," Science 2000, 287, 637 bis 640]. Gebogene SWNTs erlangen nach Beendigung der Belastung ihre ursprüngliche Form zurück, ohne dabei zu brechen, und stellen hervorragende Ausgangsmaterialien für die Entwicklung von nano-verstärkten Polymerkomposit-Materialen dar, basierend auf den außergewöhnlichen mechanischen Eigenschaften und dem großen Aspekt-Verhältnis (typischerweise -103) der einzelnen SWNTs [Mitchell CA, Bahr JL, Arepalli S, Tour JM, Krishnamoorti R: "Dispersion of Functionalized Carbon Nanotubes in Polystyrene," Macromolecules 2002, 35, 8825 bis 8830]. SWNTbasierte Komposit-Materialien können außerdem aufgrund ihrer guten optischen, elektrischen und elektronischen Eigenschaften als geeignete "aktive" Komponenten in neuartigen Materialen und Anwendungen angesehen werden [Wu Z, Chen Z, Du X, Logan JM, Sippel J, Nikololu M, Kamaras K. Reynolds JR, Tanner DB, Hebard AF, Rinzler AG: "Transparent, Conductive Carbon Nanotube Films," Science 2003, 305,1273 bis 1276].

Mittlerweile haben sich die Forschungsschwerpunkte aufgrund der besseren Dispergierbarkeit auf Multiwalled Carbon Nanotubes (MWNTs) und deren Einsatz in Polymerkompositen fokussiert [Wu H-L, Ma C-CM, Yang Y-T, Kuan H-C, Yang C-C, Chiang C-L: "Morphology, Electrical Resistance, Electromagnetic Interference Shielding and Mechanical Properties of Functionalized MWNT and Poly(urea urethane) Nanocomposites," J. Pol. Sci., Part B: Polymer Physics 2006, 44, 1096 bis 1105]. Polymer-MWNT-Komposite weisen mechanische Eigenschaften auf, die denen von konventionellen Polymer basierenden Kompositen aufgrund der intrinsischen Festigkeit und des Modulus weit überlegen sind. Die Tatsache, dass der Effizienz des Spannungstransfers in einigen Systemen über eine Größenordnung besser ist, verdeutlicht weiterhin den Vorteil der MWNTs als Füllmaterialien. Der verstärkende Effekt der MWNTs konnte sowohl mit mechanischen als auch dynamisch mechanischen Analysemethoden (DMA) nachgewiesen werden. Die Moduli konnten bei einem Füllstoffgehalt von 1% zum Teil bis zu 40% erhöht werden, wobei dieser Effekt mit einem nur geringen Anstieg von T_{g} verbunden ist. Auch bei erhöhten Füllstoffanteilen hat sich die Kristallinität zum Beispiel bei PP nur geringfügig erhöht. Aus diesen Ergebnissen kann eindeutig geschlossen werden, dass sich solche Nanotube-Polymerkomposite dafür eignen, eine Reihe von Materialeigenschaften positiv zu beeinflussen und zu modifizieren.

Polymer-SWNT-Komposite zeigen zwar ein noch vielversprechenderes Potenzial für den Einsatz als Hochleistungs-Materialien im Vergleich zu den auf MWNT-basierenden Kompositen, doch ergeben sich zumeist Probleme bei der Dispergierung, und der Einsatz von SWNTs ist bisher aus ökonomischer Sicht noch nicht rentabel.

Die MWNTs können aus zwei bis 15 graphitartigen Schichten aufgebaut sein, wobei bei zwei Schichten auch häufig von Double-walled Carbon Nanotubes (DWNTs) gesprochen wird. Die Wände der SWNTs als auch der MWNTs können eine "normale", eine Armchair-, eine Zickzack- oder eine chirale Struktur aufweisen, die sich im Grad der Verdrillung unterscheiden. Der Durchmesser der CNT kann zwischen 1 und 100 nm liegen wobei die Röhren eine Länge bis zu einem Millimeter annehmen kann [Szleifer I, Yerushalmi-Rozen R: "Polymers and carbon nanotubes - dimensionality, interactions and nanotechnology," Polymer 2005, 46, 7803 bis 7818].

Die EP 1 437 379 A1 beschreibt Folien aus Polypropylen unter Zusatz von Schichtsilicaten (Nanoclays), welche durch biaxiale Verstreckung eine verminderte der Sauerstoff - und Wasserdampfdurchlässigkeit aufweisen. Die Wirkung beruht auf der Orientierung der plättchenfömigen Füllstoffe. Eine Erhöhung der Zugfestigkeit durch die Schichtsilicate wird nicht beobachtet, wohl aber ein leichtes Ansteigen der Biegesteifigkeit, wie es beim Zusatz von Füllstoffen üblich ist.

Die WO 2005/017012 A1 beschreibt die Entwicklung von Haftklebebändern, welche unter anderem aus einer Klebemasse aufgebaut sind, in die CNT homogen dispergiert sind. Die Verbesserung der Adhäslon oder Kohäsion sowie eine generelle mechanische Verstärkung werden aber nicht offenbart. Die WO 2006/0488347 A1 beschreibt ebenfalls eine CNT-haltige Klebemasse, in der durch die spezielle Ausrichtung der CNT eine richtungsabhängige Leitfähigkeit erzielt worden ist, doch wird die Verstärkung der mechanischen Eigenschaften ebenfalls nicht gezeigt.

Aufgabe der Erfindung ist es, ein Verpackungsklebeband herzustellen, welches in Längsrichtung hohe Modulwerte (zum Beispiel als Spannung bei 10 % Dehnung) und Zugfestigkeiten aufweist und welches mittels eines möglichst einfachen Verfahrens herstellbar ist.

Gelöst wird diese Aufgabe durch die Verwendung eines Klebebands, wie es im Hauptanspruch dargelegt ist. Gegenstand der Unteransprüche sind vorteilhafte Fortbildungen des Erfindungsgegenstandes.

Demgemäß betrifft die Erfindung die Verwendung eines Klebebands mit einem Träger, der sich aus einer oder aus mehreren Trägerfolien zusammensetzt, wobei auf den Träger zumindest einseitig eine Klebemasse zumindest partiell aufgebracht ist.
Zumindest eine der Trägerfolien enthält mindestens ein Homopolymer, Copolymer oder Terpolymer des Propylens, und in zumindest einer der Trägerfolien sind Carbon Nanotubes (CNT) vorhanden.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.

Bevorzugt bestehen die Trägerfolien aus reinem Polypropylen.

Bevorzugt besteht der Träger aus einer einzigen Trägerfolie.

In einer weiteren vorteilhaften Ausführungsform der Erfindung ist der Träger vorzugsweise in Längsrichtung verstreckt.
Die Längsfestigkeit (Zugfestigkeit und Spannung bei 10 % Dehnung) wird durch die Reckung in Längsrichtung und durch die CNT als Verstärkungsfasern vorteilhaft erhöht.

Der Träger des erfindungsgemäßen Klebebandes weist in einer bevorzugten Ausführungsform in Längsrichtung eine Zugfestigkeit von mindestens 300, vorzugsweise mindestens 400 und insbesondere mindestens 500 N/mm² auf.
Die Spannung in Längsrichtung bei 10 % Dehnung liegt in einer bevorzugten Ausführungsform bei mindestens 170, vorzugsweise mindestens 200 und insbesondere mindestens 300 N/mm².
Die Dicke des Trägers liegt vorzugsweise zwischen 25 und 200, besonders bevorzugt zwischen 40 und 140 und insbesondere zwischen 50 und 90 µm.

Neben der Verwendung von Polypropylen und der CNT ist die Verstreckung des Trägers in Längsrichtung ein Kennzeichen des erfindungsgemäßen Gegenstandes, die zu einer wesentlichen Verbesserung der Eigenschaften führt.
Die Verstreckung der Folie(n) des Trägers wird bei einer Temperatur durchgeführt, welche unterhalb der Kristallitschmelztemperatur des Polypropylens liegt.
Eine Orientierung des Extrudats im geschmolzenen Zustand führt sowohl mit als auch ohne CNT nur zu einer geringen Verbesserung von Zugfestigkeit und Spannung bei 10 % Dehnung der resultierenden Folie. Dieser Vorgang wird üblicherweise zur Einstellung der Enddicke zwischen Kalander oder Extruderdüse und Kühlstrecke vorgenommen und wird nicht als Verstreckung bezeichnet.
Die Verstreckung (auch Recken genannt) kann auf handelsüblichen, dem Fachmann bekannten Vorrichtungen, wie sie zum Beispiel im ersten Arbeitsschritt der Reckung von biaxial verstreckten Folien verwendet werden, durchgeführt werden. Es ist vorteilhaft für die Eigenschaften des Trägers den Prozess so zu führen, dass die Folie(n) in der Breite im Wesentlichen nur geringfügig abnehmen. Dabei verlängert sich die Länge der Folie(n) um einen Faktor, der mit Reckverhältnis bezeichnet wird. Das Reckverhältnis beträgt erfindungsgemäß vorzugsweise 1 : 5 bis 1 : 10, besonders bevorzugt 1 : 6,5 bis 1 : 7,5. Geeignete Rohstoffe für die erfindungsgemäßen Folie oder Folien des Trägers sind Homopolymere, Copolymere oder Terpolymere des Propylens. Die Taktizität kann zum Beispiel ataktisch, isotaktisch oder syndiotaktisch sein, bevorzugt sind überwiegend isotaktische Polymere. Der Schmelzindex des Polypropylens liegt vorzugsweise zwischen 0,3 und 15 g/10 min und besonders bevorzugt zwischen 2 und 10 g/10 min. Es können auch Gemische von Polypropylenen eingesetzt werden. Bevorzugt sind Polypropylene mit Blockstruktur, zum Beispiel ein isotaktischer Hartblock aus PP und ein amorpher PE-Kautschuk-Weichblock.
Der Biegemodul des Polypropylenpolymers liegt bevorzugt zwischen 1000 und 1450 MPa.

Die Trägerfolien können weitere, dem Fachmann bekannte Additive oder Polymere enthalten, denn die Verwendung von Additiven wie Antioxidanten, UV-Absorber, Antiblock-, Gleit- oder Lichtschutzmitteln, Füllstoffen, Pigmenten oder Verträglichkeitsvermittlern ist vorteilhaft. Verträglichkeitsvermittler können zum Beispiel die Dispergierung der CNT erleichtern oder die Zugfestigkeit durch eine verbesserte Anbindung der CNT an die Polymermatrix erhöhen. Beispiele sind polar modifizierte Polyolefine wie zum Beispiel Maleinsäureanhydrid oder Acrylsäure gepropfte Polypropylene und Polyethylene sowie deren Copolymere wie zum Beispiel EVA. Insbesondere auch Additive, die die Zähigkeit beeinflussen, können verwendet werden. Dies sind zum Beispiel Weichmacher (wie Mineralöle oder Weichharze), ungesättigte oder (teil)hydrierte Harze (zum Beispiel auf Basis von Natur- oder Kohlenwasserstoffharzen), (optional hydrierte) Styrol-Dien-Blockcopolymere, Plastomere (zum Beispiel Copolymere des Ethylens mit langkettigen Polyolefinen wie Buten, Hexen oder Octen) EPDM oder LLDPE (insbesondere mit niederer Dichte).

Derartige Lichtschutzmittel sind bei Gaechter und Müller, Taschenbuch der Kunststoff-Additive, München 1979, bei Kirk-Othmer (3.) 23, 615 bis 627, bei Encycl. Polym. Sci. Technol. 14, 125 bis 148 und bei Ullmann (4.) 8, 21; 15, 529, 676 beschrieben. Insbesondere HALS-Lichtschutzmittel wie zum Beispiel Dimethylsuccinat-Polymer mit 4-Hydroxy-2,2,6,6-tetramethyl-1-piperidinethanol (CAS-Nr. 65447-77-0), Bis(2,2,6,6-tetramethyl-4-piperidinyl)sebacat (CAS-Nr. 52829-07-9) oder Poly[[6-[(1,1,3,3-tetramethyl butyl) amino]-1,3,5-triazine-2,4-diyl][[(2,2,6,6-tetramethyl-4-piperidyl) imino] hexamethylene [(2,2,6,6-tetramethyl-4-piperidyl) imino]] (CAS-Nr. 70624-18-9) sind geeignet.

Die Menge des Lichtschutzmittels sollte mindestens 0,15 Gew.-%, vorzugsweise mindestens 0,30 Gew.-% bezogen auf die Trägerfolie(n) betragen.

Eine Verwendung von Antioxidantien für die Folie(n) (zum Beispiel Irganox 1010 oder Tris-Nonylphenyl-phosphit) ist vorteilhaft, aber nicht zwingend notwendig. Weitere geeignete UV-Absorber, Lichtschutz- und Alterungsschutzmittel sind in der EP 0 763 584 A1 aufgeführt.
Als Antioxidantien können demnach N,N-di-2-naphthyl-p-phenylenediamin, 2,5-di-(t-amyl)hydroquinon, Trimethyldihydroquinolin Polymer and 6-ethoxy-2,2,4-trimethyl-1,2-dihydroquinolin, 2,6-di-t-butyl-p-cresol, 2,2'-methylene-bis(4-methyl-6-t-butylphenol), 4,4'-butylidene-bis(3-methyl-6-t-butylphenol), 4,4'-thio-bis(3-methyl-6-t-butylphenol), stearylbeta -(3,5-di-t-butyl-4-hydroxyphenyl)propionat, tetrakis[methylene-3-(3',5'-di-t-butyl-4'-hydroxyphenyl)propionate]methan, 1,3,5-trimethyl-2,4,6-tris(3,5-di-t-butyl-4-hydroxybenzyl)benzen und 1,1,3-tris(2-methyl-4-hydroxy-5-t-butylphenol)butan, Dilauryl thiodipropionat, Distearyl thiodipropionat, Lauryl stearyl thiodipropionat and Dimyristyl thiodipropionat, Triisodecyl phosphit, Diphenyl isodecyl phosphit, Triphenyl phosphit und Trinonyl phosphit sowie N-salicyloyl-N'-aldehydehydrazin, N-salicyloyl-N'-acetylhydrazin, N,N'-diphenyloxamid und N,N'-di-(2-hydroxyphenyl)oxamid Verwendung finden.

Als CNT sind SWNT und MWNT geeignet, insbesondere MWNT, da diese sich leichter und besser in der Polymermatrix verteilen lassen. Noch besser sind MWNT mit einem Aspekt-Verhältnis kleiner 1000 geeignet, da diese sich ebenfalls gut dispergieren lassen und bezüglich der Risiken der Gesundheitsschädigung unbedenklich sind. Alle im Stand der Technik beschriebenen oder bekannten CNT können erfindungsgemäß verwendet werden.

In einigen Ausführungen können die Carbon Nanotubes chemisch funktionalisiert oder anderweitig modifiziert sein. Die chemische Modifikation kann das Mischen und/oder Dispergieren mit der Polymermatrix vereinfachen. In einigen Ausführungen können die chemisch modifizierten CNT sterisch und/oder mit der Polymermatrix wechselwirken, und in anderen Ausführungen wiederum umfasst die chemische Wechselwirkung kovalente Anbindung der CNT oder CNT-Derivate an die Polymermatrix, was zu einer Vernetzung führen kann. Weiterhin können die CNT in Masterbatchen verarbeitet sein, um eine bessere Dispergierung und Verarbeitung zu gewährleisten.

Die Komposite können eine Konzentration an CNT von 0,1 bis 30 Gew.-%, vorzugsweise 0,5 bis 5 Gew.-% aufweisen, sprich die CNT in der Folie oder den Folien mit einer Konzentration von 0,1 bis 30 Gew.-% dispergiert sind.

Die Folien können mit Oberflächenbehandlungen versehen sein. Dies sind zum Beispiel zur Haftvermittlung Corona-, Flamm- oder Plasmabehandlung oder Beschichtungen von Lösungen oder Dispersionen oder flüssige strahlenhärtbare Materialien. Weitere mögliche Beschichtungen sind Bedruckungen und Antihaftbeschichtungen, zum Beispiel solche aus vernetzten Silikonen, Acrylaten (zum Beispiel Primal™ 205), Polymeren mit Vinylidenchlorid oder Vinylchlorid als Monomer oder Stearylverbindungen wie Polyvinylstearylcarbamat oder Chromstearatomplexen (zum Beispiel Quilon™ C) oder Umsetzungsprodukten aus Maleinsäureanhydridcopolymeren und Stearylamin. Die Folien können durch Kaschierung oder Strahlenbehandlung modifiziert sein.

Der Träger wird für die Klebebandanwendung ein- oder beidseitig vorzugsweise mit Haftkleber als Lösung oder Dispersion oder 100 %ig (zum Beispiel Schmelze) oder vorzugsweise durch Coextrusion mit der oder den Folien b eschichtet. Weiter vorzugsweise erfolgt die Beschichtung auf die Trägerseite vollflächig.
Die Klebeschicht(en) können durch Wärme oder energiereiche Strahlen vernetzt und erforderlichenfalls mit Trennfolie oder Trennpapier abgedeckt werden. Geeignete Haftkleber sind bei D. Satas, Handbook of Pressure Sensitive Adhesive Technology (Van Nostrand Reinhold) beschrieben. Insbesondere sind Haftkleber auf Basis Acrylat, Naturkautschuk, thermoplastischem Styrolblockcopolymer oder Silicon geeignet.

Zur Optimierung der Eigenschaften kann die zum Einsatz kommende, bevorzugte Selbstklebemasse mit einem oder mehreren Additiven wie Klebrigmachern (Harzen), Weichmachern, Füllstoffen, Pigmenten, UV-Absorbern, Lichtschutz-, Alterungsschutzmitteln, Vernetzungsmitteln, Vemetzungspromotoren oder Elastomeren abgemischt sein. Geeignete Elastomere zum Abmischen sind zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.

Klebrigmacher sind beispielsweise Kohlenwasserstoffharze (zum Beispiel aus ungesättigten C₅- oder C₇-Monomeren), Terpenphenolharze, Terpenharze aus Rohstoffen wie α-oder ß-Pinen, aromatische Harze wie Cumaron-Inden-Harze oder Harze aus Styrol oder α-Methylstyrol wie Kolophonium und seine Folgeprodukte wie disproportionierte, dimerisierte oder veresterte Harze, wobei Glycole, Glycerin oder Pentaerythrit eingesetzt werden können, sowie weitere wie aufgeführt in Ullmanns Enzyklopädie der technischen Chemie, Band 12, S. 525 bis 555 (4. Aufl.), Weinheim. Besonders geeignet sind alterungsstabile Harze ohne olefinische Doppelbindung wie zum Beispiel hydrierte Harze.

Geeignete Füllstoffe und Pigmente sind beispielsweise Ruß, Titandioxid, Calciumcarbonat, Zinkcarbonat, Zinkoxid, Silicate oder Kieselsäure.

Geeignete UV-Absorber, Lichtschutz- und Alterungsschutzmittel für die Klebemassen sind dieselben, die auch den Folie(n) zugesetzt werden können.

Geeignete Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone. Besonders geeignet sind alterungsstabile Weichmacher ohne olefinische Doppelbindung.

Vernetzungsmittel sind beispielsweise Phenolharze oder halogenierte Phenolharze, Melamin- und Formaldehydharze. Geeignete Vemetzungspromotoren sind zum Beispiel Maleinimide, Allylester wie Triallylcyanurat, mehrfunktionelle Ester der Acryl- und Methacryläure.

Die Beschichtungsstärke mit Klebemasse liegt vorzugsweise im Bereich von 18 bis 50, insbesondere 22 bis 29 g/m². Die Breite der Klebebandrollen liegt vorzugsweise im Bereich von 2 bis 60 mm.

Das bevorzugte Verfahren zur Herstellung des erfindungsgemäßen Verpackungsklebebandes ist durch folgende Arbeitsschritte gekennzeichnet:
- Mischung des Polypropylens mit CNT zum Beispiel in einem Extruder oder Kneter zu einem Compound mit nachfolgender Granulierung
- Aufschmelzen des Compounds aus Polypropylen und CNT in einem Extruder
- Abkühlen der Schmelze zu einer Folie
- Recken der Folie in Längsrichtung (optional in-line auf der gleichen Anlage)
- Beschichtung mit Haftklebstoff
- Konfektionierung zu Rollen

Statt eines Compounds können auch Mischungen aus Polypropylen und einem CNT-Masterbatch eingesetzt werden. Die Compoundierung von CNT und Polypropylen kann im Folienextruder durchgeführt werden, wenn dieser über geeignete Mischelemente verfügt.

Die Extrusion kann im Blas- oder Cast-Verfahren durchgeführt werden. Alternativ können die Komponenten in einem Kneter oder Extruder gemischt werden, die Mischung wird einem Kalander zur Ausformung der Folie zugeführt. Die Reckung erfolgt dann in-line oder off-line.

Anstelle einer Beschichtung mit Haftklebstoff kann dieser bei der Folienherstellung durch Coextrusion in Anwendung gebracht werden.

Das Klebeband findet seine Anwendungen in Verpackungsanwendungen, zum Beispiel zum Bündeln oder Gurten, als Transportsicherung (Paletten oder Türen von Haushaltsgeräten) oder zum Aufreißen von Verpackungen.
Die Nachteile von Filamentklebebändern wie geringe Knickbruchbeständigkeit, unsauberen Schneidkanten und aufwändige Herstellung weist das Klebeband nicht auf

Das wesentliche technische Kennzeichen der Erfindung ist die Kombination von hoher Seiteneinreißfestigkeit (Weiterreißkraft und Restfestigkeit) und hoher Längsfestigkeit (Zugfestigkeit und Spannung bei 10 % Dehnung) in Längsrichtung.

### Prüfmethoden

Dicke: DIN 53370
Zugfestigkeit: DIN 53455-7-5
Spannung bei 10 % Dehnung: DIN 53455-7-5
Bruchdehnung: DIN 53455-7-5
Schmelzindex: DIN 53735 (PP 230 °C, 2.16 N; PE 190 °C, 2.16 N)
Biegemodul (Flexural Modulus) ASTM D 790 A
Klebtechnische Daten: AFERA 4001 entsprechend DIN EN 1939

Die nachfolgenden Beispiele sollen die Erfindung erläutern, ohne sie zu beschränken.

### Beispiele

### Beispiel 1

97,0 Gew.-Teile Dow 7C06 (PP-Blockcopolymer, MFI 1,5 g/10 min, Biegemodul 1280 MPa, Dow) wurden mit 1,7 Gew.-Teilen Fusabond MB 528 D (MFI 6,8 g/10 min, säuregepropftes LLDPE, DuPont) und 1,3 Gew.-Teilen Baytubes™ C 150 P (Muliwall CNT mit 3 bis 5 Schichten, mittlerer Durchmesser 13 bis 16 nm, Länge 1 bis 10 µm, Bayer Material Science) in einem Doppelschneckenextruder gemischt, zu einem Strang extrudiert, granuliert und getrocknet. Der erhaltene Compound wurde in einer Extrusionsanlage aufgeschmolzen, in 60 cm Breite auf einer Chillroll ausgeformt und im Verhältnis 1 : 6,5 in Längsrichtung bei 118 °C verstreckt.

| Prüfergebnisse: | |
|---|---|
| Dicke nach dem Recken | 55 µm |
| Zugfestigkeit längs | 453 N/mm² |
| Spannung bei 10 % Dehnung längs | 250 N/mm² |
| Bruchdehnung | 19 % |

Die Folie wurde beidseitig coronavorbehandelt, auf der Oberseite mit einer 0,5 %igen Lösung von PVSC in Toluol als Release beschichtet und getrocknet. Der Klebstoff wurde aus 42 Gew.-% SIS-Elastomer, 20 Gew.-% Pentaerythritester des hydrierten Kolophoniums, 37 Gew.-% eines C₅-Kohlenwasserstoffharzes mit einem R&B-Wert von 85 °C und 1 Gew.-% Antioxidants Irganox™ 1010 in der Schmelze gemischt und bei 150 °C mit einer Düse auf die Folienunterseite aufgetragen. Anschließend wurde das Klebeband zur Mutterrolle gewickelt und zur weiteren Prüfung in 15 mm Breite geschnitten (Klingenschneider).

| Klebtechnische Daten: | |
|---|---|
| Klebkraft auf Stahl | 1,6 N/cm |
| Abrollkraft bei 0,3 m/min | 0,8 N/cm |
| Abrollkraft bei 30 m/min | 0,5 N/cm |
| Masseauftrag | 21 g/m². |

### Beispiel 2

82,0 Gew.-Teile Moplen™ HP 456 H (PP Homopolymer, MFI 1,8 g/10 min, Biegemodul 1450 MPa, Basell), 15 Gew.-Teile Elie™ 5400 (Ethylencopolymer, MFI 1 g/10 min, Dichte 0,916 g/cm³, Dow) und 1,7 Gew.-Teilen Scona TPPP 2112 FA (MFI 5 g/10 min, maleinsäureanhydridgepropftes PP-Homopolymer, Kometra) wurden gemischt, kryogemahlen und dann mit 1,3 Gew.-Teilen ATI-MWNT-001 (Muliwall CNT unbundled as grown 95 %ig, 3 bis 5 Schichten, mittlerer Durchmesser 20 bis 50 nm, Länge 0,5 bis 200 µm, Ahwahnee) in einem Drybeldner gemischt. Die Mischung wurde in einem Banbury-Kneter aufgeschmolzen und über ein Walzwerk und ein Förderband einem Kalander (inverted L type) zugeführt. Die Primärfolie wurde in 300 µm Dicke ausgeformt und bei 128 °C mit einem Reckwerk im Verhältnis 1 : 5,8 in Längsrichtung verstreckt.

| Prüfergebnisse: | |
|---|---|
| Dicke nach dem Recken | 53 µm |
| Zugfestigkeit längs | 690 N/mm² |
| Spannung bei 10 % Dehnung längs | 375 N/mm² |
| Bruchdehnung | 21 % |

Die Folie wurde beidseitig coronavorbehandelt, auf der Oberseite mit einem lösungsmittelfreien Silikon beschichtet, welches anschließend mit UV-Strahlen vernetzt wurde. Die Unterseite wurde mit einem Primer aus Naturkautschuk, Cyclokautschuk und 4,4'-Diisocyanato-diphenylmethan versehen. Der Klebstoff wurde aus 40 Gew.-% Naturkautschuk SMRL (Mooney 70), 10 Gew.-% Titandioxid, 37 Gew.-% eines C₅-Kohlenwasser-stoffharzes mit einem R&B-Wert von 95 °C und 1 Gew.-% Antioxidants Vulkanox™ BKF in einem Kneter in Hexan gelöst. Die 20 Gew.-%ige Klebemasse wurde mit einem Streichbalken auf die geprimerte Folienunterseite aufgetragen und bei 115 °C getrocknet. Anschließend wurde das Klebeband zur Mutterrolle gewickelt und zur weiteren Prüfung in 15 mm Breite geschnitten (Klingenschneider).

| Klebtechnische Daten: | |
|---|---|
| Klebkraft auf Stahl | 2,1 N/cm |
| Abrollkraft bei 0,3 m/min | 0,2 N/cm |
| Abrollkraft bei 30 m/min | 0,1 N/cm |
| Masseauftrag | 23 g/m². |

### Vergleichsbeispiel 1 (Einschichtige Folie)

Eine Folie in Strapping-Qualität wurde aus Moplen EPQ 30 RF mit einem Reckverhältnis von 1 : 8 hergestellt. Die Verarbeitung zum Klebeband erfolgte analog Beispiel 1 der EP 1 101 808 A1.

| Prüfergebnisse: | |
|---|---|
| Dicke nach dem Recken | 85 µm |
| Zugfestigkeit längs | 290 N/mm² |
| Spannung bei 10 % Dehnung längs | 169 N/mm² |
| Bruchdehnung | 35 % |

### Vergleichsbeispiel 2 (Einschichtige Folie)

Eine Folie und ein Klebeband wurden analog Vergleichsbeispiel 1 aus Dow 7C06 (PP-Blockcopolymer, MFI 1,5 g/10 min, Biegemodul 1280 MPa) mit einem Reckverhältnis von 1 : 6,6 hergestellt.

| Prüfergebnisse: | |
|---|---|
| Dicke nach dem Recken | 85 µm |
| Zugfestigkeit längs | 306 N/mm² |
| Spannung bei 10 % Dehnung längs | 166 N/mm² |
| Bruchdehnung | 25 % |

### Vergleichsbeispiel 3 (Zweischichtige Folie)

In der DE 36 40 861 A1 weist das Beispiel 1 die höchste Zugfestigkeit und Spannung bei 10 % Dehnung längs auf. Das Reckverhältnis betrug 1 : 7,5.

| Prüfergebnisse: | |
|---|---|
| Dicke nach dem Recken | 85 µm |
| Zugfestigkeit längs | 215 N/mm² |
| Spannung bei 10 % Dehnung längs | 104 N/mm² |
| Bruchdehnung | 40 % |

### Vergleichsbeispiel 4 (Einschichtige Folie)

Prüfergebnisse des Beispiel 1 der EP 0 255 866 A1 (Reckverhältnis 1 : 7):

| | |
|---|---|
| Dicke nach dem Recken | 40 µm |
| Zugfestigkeit längs | 235 N/mm² |
| übrige technische Daten | nicht bestimmt |

### Vergleichsbeispiel 5 (Folie mit coextrudiertem Filament)

In der EP 1 101 808 A1 weist das Beispiel 1 die höchste Zugfestigkeit und Spannung bei 10 % Dehnung längs auf. Das Reckverhältnis betrug 1 : 8,7.

| Prüfergebnisse: | |
|---|---|
| Dicke nach dem Recken | 77 µm |
| Zugfestigkeit längs | 231 N/mm² |
| Spannung bei 10 % Dehnung längs | 147 N/mm² |
| Bruchdehnung | 34 % |

### Vergleichsbeispiel 6 (Folie mit Rippenstruktur)

In der US 5,145,544 A1 weist das Beispiel V die höchste Zugfestigkeit längs auf. Das Reckverhältnis ist unbekannt.

| Prüfergebnisse: | |
|---|---|
| Dicke nach dem Recken | 114 µm |
| Zugfestigkeit längs | 335 N/mm² |

## Patentansprüche

1. Verwendung eines Klebebands mit einem Träger, der sich aus einer oder aus mehreren Trägerfolien zusammensetzt, wobei auf den Träger zumindest einseitig eine Klebemasse zumindest partiell aufgebracht ist, **dadurch gekennzeichnet, dass** zumindest eine der Trägerfolien mindestens ein Homopolymer, Copolymer oder Terpolymer des Propylens enthält, dass in zumindest einer der Trägerfolien Carbon Nanotubes (CNT) vorhanden sind, wobei der Träger bei einer Temperatur unterhalb der Kristallitschmelztemperatur des Polypropylens in Längsrichtung verstreckt ist und dass die CNTs in der Folie oder den Folien mit einer Konzentration von 0,1 bis 30 Gew.-% dispergiert sind, als Verpackungsklebeband:

2. Verwendung eines Klebebands nach Anspruch 1, **dadurch gekennzeichnet, dass** der Träger vorzugsweise in Längsrichtung verstreckt ist und/oder der Träger aus einer einzigen Trägerfolie besteht.

3. Verwendung eines Klebebands nach Anspruch 1 oder 2, **dadurch gekennzeichnet, dass**
der Träger eine Zugfestigkeit nach DIN 53455-7-5 von mindestens 300, vorzugsweise mindestens 400 und insbesondere mindestens 500 N/mm² in Längsrichtung aufweist,
der Träger in Längsrichtung eine Spannung bei 10 % Dehnung nach DIN 53455-7-5 von mindestens 170, vorzugsweise mindestens 200 und insbesondere mindestens 300 N/mm² aufweist und/oder
der Träger eine Dicke nach DIN 53370 zwischen 25 und 200, bevorzugt zwischen 40 und 140 und insbesondere zwischen 50 und 90 µm aufweist.

4. Verwendung eines Klebebands nach zumindest einem der Ansprüche 1 bis 3, **dadurch gekennzeichnet, dass** die Trägerfolie(n) mit einem Reckverhältnis von 1 : 5 bis 1 : 10 in Längsrichtung verstreckt sind.

5. Verwendung eines Klebebands nach zumindest einem der vorherigen Ansprüche, **dadurch gekennzeichnet, dass** der Träger einen Polypropylenrohstoff mit einem Schmelzindex nach DIN 53735 (PP 230 °C, 2.16 N; PE 190 °C, 2.16N) von 0,3 bis 15 g/10 min, vorzugsweise 2 bis 10 g/10 min und/oder oder mit einem Biegemodul nach ASTM D 790 A zwischen 1000 und 1450 MPa enthält.

6. Verwendung eines Klebebands nach zumindest einem der vorherigen Ansprüche, **dadurch gekennzeichnet, dass** die CNT Multiwalled Carbon Nanotubes (MWNT) sind.

7. Verwendung eines Klebebands nach zumindest einem der vorherigen Ansprüche, **dadurch gekennzeichnet, dass** die CNT ein Aspekt-Verhältnis von 10000, bevorzugt kleiner 1000 aufweisen.

8. Verwendung eines Klebebands nach zumindest einem der vorherigen Ansprüche, **dadurch gekennzeichnet, dass** die CNT in der Folie oder den Folien mit einer Konzentration von 0,5 bis 5 Gew.-% dispergiert sind.

9. Verwendung eines Klebebands nach zumindest einem der vorherigen Ansprüche, **dadurch gekennzeichnet, dass** die CNT chemisch funktionalisiert oder modifiziert sind.

10. Verwendung eines Klebebands nach zumindest einem der vorherigen Ansprüche, **dadurch gekennzeichnet, dass** die Beschichtungsstärke mit Klebemasse auf dem Träger, im Bereich von 18 bis 50, insbesondere 22 bis 29 g/m² liegt.

## Claims

1. Use of an adhesive tape having a carrier which is composed of one or more carrier films, at least one side of the carrier bearing an adhesive applied at least partially, **characterized in that** at least one of the carrier films comprises at least one homopolymer, copolymer or terpolymer of propylene, **in that** there are carbon nanotubes (CNTs) in at least one of the carrier films, the carrier having been oriented in machine direction at a temperature below the crystallite melting temperature of the polypropylene, and **in that** the CNTs are in dispersion in the film or films at a concentration of 0.1% to 30% by weight, as adhesive packaging tape.

2. Use of an adhesive tape according to Claim 1, **characterized in that** the carrier has been oriented preferably in the machine direction and/or the carrier is composed of a single carrier film.

3. Use of an adhesive tape according to Claim 1 or 2, **characterized in that**
the carrier has a machine-direction tensile strength according to DIN 53455-7-5 of at least 300, preferably at least 400 and in particular at least 500 N/mm²,
the carrier has a machine-direction stress at 10% extension according to DIN 53455-7-5 of at least 170, preferably at least 200 and in particular at least 300 N/mm² and/or
the carrier has a thickness according to DIN 53370 of between 25 and 200, preferably between 40 and 140 and in particular between 50 and 90 µm.

4. Use of an adhesive tape according to at least one of Claims 1 to 3, **characterized in that** the carrier film or films have been oriented in machine direction with a draw ratio of 1:5 to 1:10.

5. Use of an adhesive tape according to at least one of the preceding claims, **characterized in that** the carrier comprises a polypropylene raw material having a melt index according to DIN 53735 (PP 230°C, 2.16 N; PE 190°C, 2.16 N) of 0.3 to 15 g/10 min, preferably 2 to 10 g/10 min and/or having a flexural modulus according to ASTM D 790 A of between 1000 and 1450 MPa.

6. Use of an adhesive tape according to at least one of the preceding claims, **characterized in that** the CNTs are multiwalled carbon nanotubes (MWNT).

7. Use of an adhesive tape according to at least one of the preceding claims, **characterized in that** the CNTs have an aspect ratio of 10 000, preferably less than 1000.

8. Use of an adhesive tape according to at least one of the preceding claims, **characterized in that** the CNTs are in dispersion in the film or films at a concentration of 0.5% to 5% by weight.

9. Use of an adhesive tape according to at least one of the preceding claims, **characterized in that** the CNTs have been chemically functionalized or modified.

10. Use of an adhesive tape according to at least one of the preceding claims, **characterized in that** the thickness of coating with adhesive on the carrier is in the range from 18 to 50, in particular 22 to 29 g/m².

## Revendications

1. Utilisation d'un ruban adhésif comprenant un support composé d'une ou de plusieurs feuilles supports, une masse adhésive étant appliquée au moins partiellement sur le support au moins d'un côté, **caractérisée en ce qu'**au moins une des feuilles supports contient au moins un homopolymère, copolymère ou terpolymère de propylène, **en ce que** des nanotubes de carbone (CNT) sont présents dans au moins une des feuilles supports, le support étant étiré dans la direction longitudinale à une température inférieure à la température de fusion des cristallites du polypropylène, et **en ce que** les CNT sont dispersés dans la feuille ou dans les feuilles en une concentration de 0,1 à 30 % en poids, en tant que ruban adhésif d'emballage.

2. Utilisation d'un ruban adhésif selon la revendication 1, **caractérisée en ce que** le support est de préférence étiré dans la direction longitudinale et/ou le support est constitué d'une feuille support individuelle.

3. Utilisation d'un ruban adhésif selon la revendication 1 ou 2, **caractérisée en ce que** le support présente une résistance à la traction selon DIN 53455-7-5 d'au moins 300, de préférence d'au moins 400 et notamment d'au moins 500 N/mm², dans la direction longitudinale,
le support présente dans la direction longitudinale une tension à 10 % d'allongement selon DIN 53455-7-5 d'au moins 170, de préférence d'au moins 200 et notamment d'au moins 300 N/mm², et/ou
le support présente une épaisseur selon DIN 53370 comprise entre 25 et 200, de préférence entre 40 et 140 et notamment entre 50 et 90 µm.

4. Utilisation d'un ruban adhésif selon au moins l'une quelconque des revendications 1 à 3, **caractérisée en ce que** la ou les feuilles supports sont étirées dans la direction longitudinale avec un taux d'étirement de 1:5 à 1:10.

5. Utilisation d'un ruban adhésif selon au moins l'une quelconque des revendications précédentes, **caractérisée en ce que** le support contient une matière première polypropylène ayant un indice de fluidité selon DIN 53735 (PP 230 °C, 2,16 N ; PE 190 °C, 2,16 N) de 0,3 à 15 g/10 min, de préférence de 2 à 10 g/10 min, et/ou un module de flexion selon ASTM D 790 A compris entre 1 000 et 1 450 MPa.

6. Utilisation d'un ruban adhésif selon au moins l'une quelconque des revendications précédentes, **caractérisée en ce que** les CNT sont des nanotubes de carbone multifeuillets (MWNT, Multiwalled Carbon Nanotubes).

7. Utilisation d'un ruban adhésif selon au moins l'une quelconque des revendications précédentes, **caractérisée en ce que** les CNT présentent un rapport de longueur de 10 000, de préférence inférieur à 1 000.

8. Utilisation d'un ruban adhésif selon au moins l'une quelconque des revendications précédentes, **caractérisée en ce que** les CNT sont dispersés dans la feuille ou dans les feuilles en une concentration de 0,5 à 5 % en poids.

9. Utilisation d'un ruban adhésif selon au moins l'une quelconque des revendications précédentes, **caractérisée en ce que** les CNT sont modifiés ou fonctionnalisés chimiquement.

10. Utilisation d'un ruban adhésif selon au moins l'une quelconque des revendications précédentes, **caractérisée en ce que** l'épaisseur de revêtement avec la masse adhésive sur le support est dans la plage allant de 18 à 50, notamment 22 à 29 g/m².
